# EUROPÄISCHE PATENTANMELDUNG

(11) **EP 3 376 152 A1**
(43) Veröffentlichungstag der Anmeldung: **19.09.2018**
(21) Anmeldenummer: 17204122.0
(22) Anmeldetag: 28.11.2017
(51) Int. Cl.: F41G 3/02, B64C 39/02, F41G 3/16, G01S 7/00, G01S 17/58, G01S 17/89, G01S 13/58, G01S 13/89, G06K 9/00

(54) **INFORMATIONSVERARBEITUNGSSYSTEM UND INFORMATIONSVERARBEITUNGSVERFAHREN**

(30) Priorität: 13.03.2017 DE 102017204107
(71) Anmelder: MBDA Deutschland GmbH, 86529 Schrobenhausen (DE)
(72) Erfinder: Ger, Michael, 86156 Augsburg (DE)
(74) Vertreter: Isarpatent

(57) **Zusammenfassung**

Die vorliegende Erfindung schafft ein Informationsverarbeitungssystem (100) für eine Vielzahl von Benutzern (101, 0104) zur Anreicherung von Umgebungsinformationen über ein relevantes Gebiet, mit mindestens einer Erfassungseinrichtung (102), welche von den Benutzern (101, 104) mitführbar ist und welche ausgebildet ist, relevante Objekte (121) zu detektieren und entsprechende Detektionsergebnisse (103) auszugeben, und mindestens einer Ausgabeeinrichtung (105), welche von einem weiteren Benutzer (101, 104) mitführbar ist und welche ausgebildet ist, für den jeweiligen Benutzer (101, 104) die Detektionsergebnisse (103) auszugeben. Ferner schafft die vorliegende Erfindung ein entsprechendes Informationsverarbeitungsverfahren.

## Beschreibung

Die vorliegende Erfindung betrifft ein Informationsverarbeitungssystem und ein entsprechendes Informationsverarbeitungsverfahren.

Einsatzkräfte und Rettungskräfte, z.B. von Polizei, Militär, Feuerwehr oder dergleichen, müssen sich häufig in unübersichtlichen Situationen zurechtfinden. Beispielsweise müssen Polizeikräfte häufig in unübersichtlichen städtischen Wohngebieten eine oder mehrere Personen verfolgen. Rettungskräfte müssen insbesondere bei Großereignissen, wie z.B. einem Brand in einer Fabrik oder einer Massenpanik auf einer Großveranstaltung, sehr schnell hilfsbedürftige Personen orten und bergen können. Im militärischen Bereich müssen sich Soldaten z.B. häufig in ihnen unbekanntem städtischen oder ländlichen Gelände fortbewegen und Kampfhandlungen durchführen.

Eine Person, z.B. ein Polizist oder ein Soldat, hat ein eingeschränktes Blickfeld und einen eingeschränkten Bewegungsradius. Bei all den oben genannten Szenarien ist es daher für das jeweilige Individuum schwer, sich alleine einen Überblick über die Gesamtsituation zu verschaffen.

Es ist daher vorgesehen, dass sich einzelne Einsatzkräfte z.B. per Funk miteinander unterhalten können, um so Ihre Erkenntnisse auszutauschen. Dies ermöglicht es einzelnen Einsatzkräften Ihre Beobachtungen mit Kollegen und z.B. einer Einsatzzentrale zu teilen und Verstärkung oder Unterstützung anzufordern.

Ein System, welches Einsatzkräfte bei der Kommunikation unterstützt, ist z.B. in der US 5,864,481 gezeigt.

Vor diesem Hintergrund liegt der vorliegenden Erfindung die Aufgabe zugrunde, eine verbesserte Informationsverarbeitung für Einsatzkräfte bereitzustellen.

Erfindungsgemäß wird diese Aufgabe gelöst durch ein Informationsverarbeitungssystem mit den Merkmalen des Patentanspruchs 1, und durch ein Informationsverarbeitungsverfahren mit den Merkmalen des Patentanspruchs 8.

Demgemäß ist ein Informationsverarbeitungssystem für eine Vielzahl von Benutzern zur Anreicherung von Umgebungsinformationen über ein relevantes Gebiet vorgesehen. Das Informationsverarbeitungssystem umfasst mindestens eine Erfassungseinrichtung, welche von den Benutzern mitführbar ist und welche ausgebildet ist, relevante Objekte zu detektieren und entsprechende Detektionsergebnisse auszugeben, und mindestens eine Ausgabeeinrichtung, welche jeweils von einem Benutzer mitführbar ist und welche ausgebildet ist, für den jeweiligen Benutzer die Detektionsergebnisse auszugeben.

Darüber hinaus ist ein Informationsverarbeitungsverfahren für eine Vielzahl von Benutzern zum Anreichern von Umgebungsinformationen über ein relevantes Gebiet vorgesehen. Das Informationsverarbeitungsverfahren weist die folgenden Schritte auf: Detektieren relevanter Objekte durch mindestens einen der Benutzer mit mindestens einer Erfassungseinrichtung, Bereitstellen entsprechender Detektionsergebnisse, und Ausgeben der Detektionsergebnisse für einen weiteren Benutzer durch mindestens eine Ausgabeeinrichtung.

Die vorliegende Erfindung setzt zur Erfassung des Geschehens in dem relevanten Gebiet eine Vielzahl von Erfassungseinrichtungen ein. Die Erfassungseinrichtungen können dabei z.B. von den Benutzern des Informationsverarbeitungssystems mitgeführt werden und Objekte in dem relevanten Gebiet detektieren. Unter einem Benutzer des Informationsverarbeitungssystems sind dabei alle Einheiten zu verstehen, die in dem Informationsverarbeitungssystem integriert sein können. Solche Einheiten können dabei menschliche Einsatzkräfte, aber auch gesteuerte oder autonome Fahrzeuge und Flugobjekte oder dergleichen umfassen.

Die Erfassungseinrichtungen können z.B. entsprechende Sensoren aufweisen, die es ihnen ermöglichen, die relevanten Objekte zu erfassen. Welche Objekte in dem relevanten Gebiet als relevante Objekte zu klassifizieren sind, kann z.B. vor Beginn eines Einsatzes des Informationsverarbeitungssystems vorgegeben werden. Bei einem militärischen Einsatz können z.B. Menschen, Fahrzeuge und Flugzeuge als relevante Objekte klassifiziert werden. Bei anderen Einsatzszenarien, z.B. im Katastrophenfall oder bei Polizeieinsätzen, können gezielt bestimmte Personen, z.B. Personen die laut rufen oder am Boden liegen, als relevante Objekte bestimmt werden. Beispielsweise können nach einem Erdbeben oder einem Sturm in schwer zugänglichen Gebieten beschädigte Häuser und verletzte Personen als relevante Objekte vorgebeben werden. Mit Hilfe von Flugzeugen bzw. Drohnen kann das Katastrophengebiet dann automatisch abgeflogen werden und die beschädigten Häuser, in denen sich z.B. noch Personen aufhalten könnten, und verletzten Personen geortet werden. Das Informationsverarbeitungssystem kann aber z.B. auch in der Forstwirtschaft genutzt werden. Dabei können z.B. Drohnen genutzt werden, um kranke Bäume in einem großen Waldbestand zu identifizieren und deren Positionen zu erfassen. Diese können dann als Detektionsergebnisse an einen Förster übermittelt werden.

Die Erfassungseinrichtungen können zur Erfassung der relevanten Objekte jede Art von Sensor aufweisen, die geeignet ist, das jeweilige Objekt und dessen Position zu detektieren. Solche Sensoren können z.B. GPS-Sensoren, Kamera-basierte Sensoren, Laser- oder Radarsensoren, Ultraschallsensoren, Infrarotsensoren oder dergleichen sein. Die Erfassungseinrichtungen können auch stereoskopische Bilderfassung und Triangulationstechniken einsetzen. Dies ermöglicht eine höhere Granularität der erfassten Daten.

Die Detektion der relevanten Objekte kann mit Hilfe entsprechender Erkennungsalgorithmen erfolgen, welche auf die jeweiligen Sensorsignale angewandt werden. Es versteht sich, dass einzelne Benutzer, z.B. (teil-)autonome Drohnen oder Drohnenschwärme, auch mehrere Arten von Sensoren aufweisen können, um die relevanten Objekte zu detektieren.

Das Informationsverarbeitungssystem ermöglicht es nun, den einzelnen Benutzern die Detektionsergebnisse anderer Benutzer zu übermitteln und durch entsprechende Ausgabeeinrichtungen auszugeben, also deren Informationsbasis anzureichern. Die Umgebungsinformationen, die ein Benutzer bereits besitzt, können folglich mit weiteren Informationen angereichert werden.

Es können einem Benutzer also z.B. Informationen über die Position eines relevanten Objekts übermittelt werden. Soldaten können so z.B. Informationen über relevante Objekte erhalten, die außerhalb ihres Blickfeldes liegen und ihr Vorgehen mit Hilfe dieser Information besser planen. Insbesondere können bei dem erfindungsgemäßen Informationsverarbeitungssystem in den Detektionsergebnissen lediglich bereits extrahierte Informationen zu den relevanten Objekten anstelle von Bildern übermittelt werden. Dadurch kann die benötigte Bandbreite gering gehalten werden.

Diejenigen Benutzer, welche ein relevantes Objekt auf Grund ihrer Position erfassen können, werden im Rahmen dieser Erfindung auch als situationsbegünstigte Benutzer bezeichnet. Diejenigen Benutzer, die ein relevantes Objekt auf Grund ihrer Position nicht erfassen können, werden im Rahmen dieser Erfindung auch als situationsbenachteiligte Benutzer bezeichnet. Es kann dabei vorkommen, dass ein bezüglich eines relevanten Objekts situationsbegünstigter Benutzer bezüglich eines anderen Objekts gleichzeitig ein situationsbenachteiligter Benutzer ist. Ein situationsbegünstigter Benutzer kann z.B. auch ein Netzwerk aus öffentlichen Überwachungskameras, z.B. an einem Bahnhof oder in einem Stadtgebiet, sein.

Durch den Austausch der Detektionsergebnisse mit dem Informationsverarbeitungssystem kann die Informationsbasis der einzelnen Benutzer harmonisiert werden und eine möglichst umfassende Basis zur Entscheidungsfindung bereitgestellt werden.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Informationsverarbeitungssystem ein Kommunikationsnetzwerk aufweisen, welches die Erfassungseinrichtungen und die Ausgabeeinrichtungen miteinander in datenkommunikativer Verbindung koppelt.

Die Erfassungseinrichtungen und die Ausgabeeinrichtungen können folglich entsprechende Kommunikationshardware aufweisen, welche ihnen die Teilnahme an dem Kommunikationsnetzwerk ermöglicht. Das Kommunikationsnetzwerk kann z.B. von einem zentralen Server verwaltet werden, der die Daten der einzelnen Teilnehmer empfängt und weiterleitet. Das Kommunikationsnetzwerk kann aber z.B. auch ein sog. vermaschtes Netzwerk sein, bei dem kein zentraler Server die Kommunikation verwaltet, sondern jeder Knoten mit einem oder mehreren anderen Knoten verbunden ist. Ein solches vermaschtes Netzwerk kann ein selbstheilendes Netzwerk sein, bei welchem ausgefallene Knoten erkannt und ersetzt bzw. überbrückt werden. Ferner kann ein solches vermaschtes Netzwerk ein ad-hoc Netzwerk sein, welchem neue Teilnehmer, sobald sie in Reichweite des Netzwerks gelangen, beitreten können.

Es versteht sich, dass das Kommunikationsnetzwerk sowohl drahtlose als auch drahtgebundene Übertragungsstrecken aufweisen kann. Beispielsweise können die Erfassungseinrichtungen und die Ausgabeeinrichtungen drahtlos miteinander und/oder mit einem Backbone-Netzwerk kommunizieren. Ein solches Backbone-Netzwerk kann aber selbst eine Vielzahl drahtgebundener Verbindungen aufweisen.

Ferner kann das Kommunikationsnetzwerk die Datenkommunikation verschlüsseln. Dazu kann in jedem der Netzwerkteilnehmer entsprechende Hard- und/oder Software vorgesehen sein, welche eine Verschlüsselung der übertragenen Daten mit einer ausreichend sicheren Verschlüsselung ermöglicht.

Gemäß einer Weiterbildung kann das Informationsverarbeitungssystem eine Anzeigeeinrichtung für zumindest einen der Benutzer aufweisen, welche ausgebildet ist, die von der jeweiligen Ausgabeeinrichtung ausgegebenen Detektionsergebnisse für den Benutzer anzuzeigen.

Die Anzeigeeinrichtung kann z.B. von menschlichen Benutzern mitgeführt werden und diesen die Positionen der relevanten Objekte anzeigen. Beispielsweise kann die Anzeigeeinrichtung ein Bildschirm sein, der einen Kartenausschnitt anzeigt, der die Position des Benutzer und der relevanten Objekte anzeigt. Die Anzeigeeinrichtung kann aber auch eine Augmented-Reality-Anzeige sein, die einem Blickfeld des Benutzers die Detektionsergebnisse überlagert. Blickt ein Benutzer also z.B. auf eine Mauer, hinter der aber ein relevantes Objekt identifiziert wurde, kann ihm durch die Augmented-Reality-Anzeige das Objekt dennoch angezeigt werden. Ein solches Objekt kann z.B. als Umriss in einer wählbaren Farbe dargestellt werden.

Gemäß einer Weiterbildung können die Erfassungseinrichtungen ausgebildet sein, die Position und/oder die Art und/oder die Haltung und/oder eine Orientierung und/oder die Geschwindigkeit und/oder eine Gesinnung der relevanten Objekte zu erkennen.

Die Erfassungseinrichtungen können eine Vielzahl von Informationen über die relevanten Objekte erfassen und in dem Detektionsergebnis ausgeben. Beispielsweise können die Erfassungseinrichtungen neben der Position, also z.B. einer absoluten geografischen Position, auch die Art, Haltung und Orientierung des Objekts erfassen. Bei einer Person kann eine Erfassungseinrichtung also z.B. feststellen, ob diese liegt, kniet oder steht und in welche Richtung diese blickt. Bei Fahrzeugen kann eine Erfassungseinrichtung z.B. die Orientierung bzw. Ausrichtung des Fahrzeugs oder von Bestandteilen des Fahrzeugs erfassen. Bei einem Panzer z.B. kann eine Erfassungseinrichtung die Fahrtrichtung des Panzers und die Ausrichtung des Geschützturms separat erfassen.

Die Erfassungseinrichtungen können ferner auch eine Gesinnung der relevanten Objekte erfassen. Beispielswiese können die Erfassungseinrichtungen erfassen, ob es sich um eine eigene bzw. verbündete Einheit oder um eine feindliche Einheit handelt.

Zur Erkennung der oben genannten Details können die Erfassungseinrichtungen z.B. Sensoren und geeignete Erkennungsalgorithmen aufweisen. Solche Erkennungsalgorithmen können z.B. Bild- und Objekterkennungsalgorithmen oder Algorithmen aufweisen, die auf maschinellem Lernen basieren. Zusätzlich können die Erfassungseinrichtungen z.B. auch Bilder der Objekte an eine zentrale Auswertestelle übermitteln, welche automatisiert und/oder manuell die Auswertung unterstützt. Die Erkennung der Gesinnung kann z.B. anhand einer Auswertung von Flaggen oder Symbolen erfolgen, welche auf einem relevanten Objekt befestigt sind. Zusätzlich oder alternativ können Funksignale bzw. -Kennungen der relevanten Objekte ausgewertet werden.

Gemäß einer Weiterbildung kann die Anzeigeeinrichtung ausgebildet sein, die in den Detektionsergebnissen enthaltenen Daten für den Benutzer darzustellen.

Die Anzeigeeinrichtung kann z.B. anhand von Piktogrammen die Position, Art, Haltung, Orientierung, Geschwindigkeit und Gesinnung der relevanten Objekte anzeigen. Selbstverständlich kann die Anzeigeeinrichtung auch Bilder bzw. Modellbilder der relevanten Objekte anzeigen und diese z.B. mit Piktogrammen ergänzen.

Die Anzeigeeinrichtung kann z.B. ein Bild einer knienden Person anzeigen und mit einem Piktogramm über dem Bild kenntlich machen, ob es sich um eine befreundete oder feindliche Person handelt.

Insbesondere kann die Anzeigeeinrichtung einen Objektspeicher aufweisen, in welchem Bilder unterschiedlicher Arten von Objekten gespeichert sind. Erhält die Anzeigeeinrichtung die Information, dass ein bestimmtes Objekt erkannt wurde, muss kein Bild des Objekts übertragen werden sondern die Anzeigeeinrichtung kann das entsprechende Bild aus dem Objektspeicher laden.

Gemäß einer Weiterbildung können die Ausgabeeinrichtungen ausgebildet sein, basierend auf den Detektionsergebnissen eine Bewegung der relevanten Objekte zu berechnen und eine mögliche Trajektorie der relevanten Objekte auszugeben.

Es versteht sich, dass auch die Erfassungseinrichtungen die mögliche Trajektorie berechnen können oder dass für diese Aufgabe eine zentrale Recheneinheit vorgesehen werden kann. Die erfassten und in den Detektionsergebnissen übertragenen Daten können wie oben bereits erläutert, z.B. eine Orientierung und eine Geschwindigkeit eines der relevanten Objekte aufweisen. Auf Basis dieser Daten kann eine Projektion der Position des relevanten Objekts für die Zukunft durchgeführt werden. Dabei können auch Geländeeigenschaften berücksichtigt werden. Bewegt sich ein Fahrzeug z.B. auf einer Straße, kann davon ausgegangen werden, dass sich das Fahrzeug nicht von der Straße entfernt bzw. dieser folgt. Das Fahrzeug wird also auf der Straße auch eine Kurve fahren, wenn die Straße diese vorgibt und nicht geradeaus fahren.

Die geschätzten oder möglichen Trajektorien können bei der Anzeige für den Benutzer gesondert gekennzeichnet werden.

Gemäß einer Weiterbildung können die Erfassungseinrichtungen ausgebildet sein, statische Merkmale des relevanten Gebiets zu erfassen. Ferner können die Ausgabeeinrichtungen ausgebildet sein, ein virtuelles Modell des relevanten Gebiets zu erstellen und auszugeben, welches eine Kombination aus den statischen Merkmalen und den erfassten relevanten Objekten umfasst.

Es versteht sich, dass die Informationen zu den statischen Merkmalen alternativ nicht in Echtzeit erfasst werden. Die Informationen zu den statischen Merkmalen können z.B. bereits aus vorab durchgeführten Aufklärungseinsätzen oder öffentlich verfügbaren Datenquellen bekannt sein. Als statische Merkmale können alle nichtveränderlichen Objekte in dem relevanten Gebiet angesehen werden. Beispiele solcher Objekte sind z.B. Häuser, Berge, Straßen, Bäume und dergleichen.

Mit Hilfe der Informationen über die statischen Merkmale kann ein statisches Modell des relevanten Gebiets erstellt werden. Dieses statische Modell kann z.B. als 3D-Modell verfügbar gemacht werden und erlaubt einem Benutzer, die Planung und Simulation seiner Handlungen, bevor er diese ausführt.

Dabei kann die Szenerie aus beliebigen Perspektiven betrachtet werden und die Daten können in abweichender Form dargestellt werden. Beispielsweise kann die Sichtweise eines Feindes oder eines Feinradars simuliert werden oder eine Trajektorie dargestellt werden.

Während der Benutzer sich in dem relevanten Gebiet bewegt, können die Informationen über statische Merkmale mit den Informationen über die relevanten Objekte kombiniert werden. So können einem Benutzer z.B. relevante Objekte angezeigt werden, die außerhalb seines Blickfeldes liegen, also z.B. hinter einer Mauer oder in einem Gebäude.

Die Daten zu den statischen Merkmalen können ferner von den Ausgabeeinrichtungen oder den Anzeigeeinrichtungen genutzt werden, um die Position des Benutzers zu erfassen und mit dem Modell des relevanten Gebiets zu synchronisieren. So können z.B. von einem Augmented-Reality-System erfasste Gebäude, Straßen, Bäume oder dergleichen bzw. deren Positionen und Entfernungen zu dem Benutzer mit dem Modell des relevanten Gebiets verglichen werden und so die Position des jeweiligen Benutzers bestimmt bzw. verifiziert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine schematische Darstellung einer Ausführungsform eines Informationsverarbeitungssystems gemäß der vorliegenden Erfindung;
- Fig. 2: eine schematische Darstellung einer weiteren Ausführungsform eines Informationsverarbeitungssystems gemäß der vorliegenden Erfindung;
- Fig. 3: eine schematische Darstellung einer weiteren Ausführungsform eines Informationsverarbeitungssystems gemäß der vorliegenden Erfindung;
- Fig. 4: eine schematische Darstellung einer weiteren Ausführungsform eines Informationsverarbeitungssystems gemäß der vorliegenden Erfindung; und
- Fig. 5: ein Ablaufdiagramm einer Ausführungsform eines Informationsverarbeitungsverfahrens gemäß der vorliegenden Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

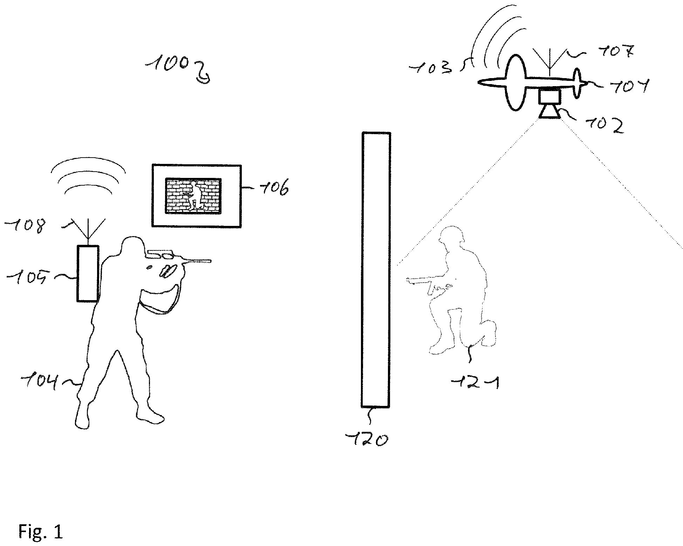

Fig. 1 zeigt eine schematische Darstellung eines Informationsverarbeitungssystems 100. Das Informationsverarbeitungssystem 100 weist einen ersten Benutzer auf, der als Drohne 101 ausgebildet ist, die ein vorgegebenes Gebiet selbständig überwacht. Die Drohne 101 weist dazu eine Erfassungseinrichtung 102 auf und gibt entsprechende Detektionsergebnisse 103 aus.

In dem Informationsverarbeitungssystem 100 ist ferner ein zweiter Benutzer dargestellt, der als Soldat 104 ausgebildet ist. Der Soldat 104 führt eine Ausgabeeinrichtung 105 mit sich, welche die Detektionsergebnisse 103 aufnimmt und über eine Anzeigeeinrichtung 106 für den Soldat 104 darstellt.

In dem Informationsverarbeitungssystem 100 sind die Drohne 101 und die Ausgabeeinrichtung 105 drahtlos miteinander gekoppelt und weisen entsprechende Antennen 107, 108 und Kommunikationsmodule zur Datenübertragung auf.

Vor dem Soldat 104 ist schematisch eine Mauer 120 dargestellt, hinter der eine Person 121 kniet. Da die Person 121 durch die Mauer 120 verdeckt ist, hat der Soldat 104 keinen Sichtkontakt zu der Person 121 bzw. keine Kenntnis von deren Existenz.

Das Informationsverarbeitungssystem 100 kann den Soldat 104 in solch einer Situation unterstützen, indem die Detektionsergebnisse 103 der Drohne 101 drahtlos an die Ausgabeeinrichtung 105 übermittelt werden und dem Soldat 104 angezeigt werden. Obwohl der Soldat 104 keine Sichtverbindung zu der Person 121 hat, kann er mit Hilfe des Informationsverarbeitungssystems 100 darüber informiert werden, dass sich die Person 121 hinter der Mauer 120 befindet. Mit Hilfe dieser Information kann der Soldat 104 sein weiteres Vorgehen planen.

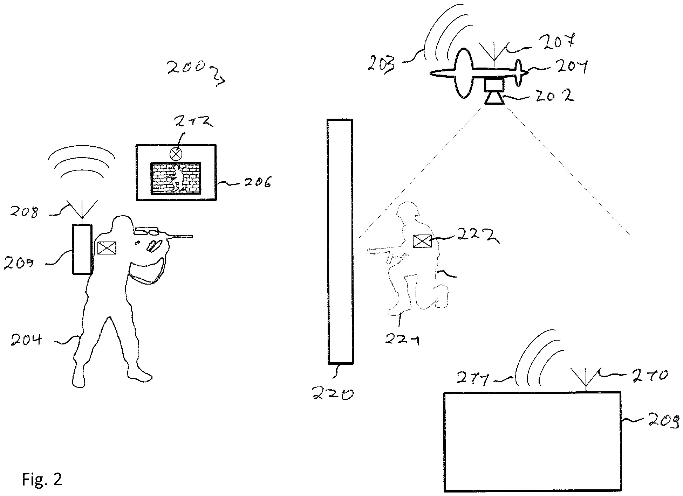

Beispielsweise kann die Erfassungseinrichtung 102 eine Kamera, einen Radar, einen Infrarotsensor oder dergleichen aufweisen. Mit Hilfe dieser Sensoren kann die Erfassungseinrichtung 102 nicht nur eine Position der Person 121 erfassen. Vielmehr können z.B. weitere Bild- und Objekterkennungsalgorithmen vorgesehen sein, mit deren Hilfe die Erfassungseinrichtung 102 auch die Art, die Haltung, die Orientierung, die Geschwindigkeit und/oder eine Gesinnung (siehe Fig. 2) der Person 121 erkennen kann. Ferner kann die Erfassungseinrichtung 102 z.B. auch eine Bewaffnung der Person 121 erfassen und ausgeben.

Die Anzeigeeinrichtung 106 ist in Fig. 1 lediglich schematisch dargestellt. Es versteht sich, dass die Anzeigeeinrichtung 106 aber jede geeignete Art von Anzeigeeinrichtung 106 sein kann. Beispielsweise kann die Anzeigeeinrichtung 106 einen Bildschirm aufweisen, den der Soldat 104 betrachten kann. Zusätzlich oder alternativ kann die Anzeigeeinrichtung 106 aber z.B. auch ein Head-Up oder Augmented-Reality Display sein, welches Informationen direkt in das Blickfeld des Soldaten 104 einblendet.

Die Anzeigeeinrichtung 106 kann die Informationen für den Soldat 104 ferner auf unterschiedliche Art darstellen. Die Anzeigeeinrichtung 106 kann die Detektionsergebnisse 103 z.B. als Text darstellen. Zusätzlich oder alternativ kann die Anzeigeeinrichtung 106 die Detektionsergebnisse 103 aber auch grafisch darstellen und z.B. ein Bild oder Modell der Person 121 visualisieren. Dazu kann die Anzeigeeinrichtung 106 z.B. einen Kartenausschnitt oder ein Bild des relevanten Geländes mit den entsprechenden Informationen überlagern. Ferner kann die Anzeigeeinrichtung 106 die Ausrichtung bzw. Orientierung des Soldaten 104 berücksichtigen und die Karte bzw. den jeweiligen Geländeausschnitt entsprechend drehen.

Ferner kann sowohl die Drohne 101 als z.B. auch die Ausgabeeinrichtung 105 oder die Anzeigeeinrichtung 106 jeweils ihr Umfeld erfassen und statische Merkmale, wie z.B. die Mauer 120 erfassen. Werden auch die statischen Merkmale erfasst, kann ein 3D Modell der Umgebung erzeugt werden und die erfassten Objekte, z.B. die Person 121, kann in dem Modell dargestellt werden. Dies ermöglicht dem Soldaten 104 eine genauere Lokalisierung der Person 121 und damit eine bessere Planung seines Vorgehens.

Bei dem Informationsverarbeitungssystem 100 kommunizieren die Drohne 101 und die Ausgabeeinrichtung 105 direkt miteinander. Es versteht sich aber, dass in dem Informationsverarbeitungssystem 100 eine Vielzahl von Benutzern integriert sein kann. Die einzelnen Benutzer bzw. deren Ausgabeeinrichtungen 105 können in solch einem Fall in einem vermaschten ad-hoc Netzwerk miteinander kommunizieren. Solche Netzwerke bieten eine hohe Fehlertoleranz und können sich selbst heilen, also ausgefallene Knoten ersetzen. Es versteht sich aber, dass jede andere Art von Netzwerk ebenfalls verwendet werden kann.

Die Fig. 1 zeigt lediglich eine beispielhafte Ausführungsform des Informationsverarbeitungssystems 100. Beispielsweise kann die Aufklärungsarbeit anstelle der Drohne 101 auch eine Person oder ein Fahrzeug durchführen. Ferner versteht sich, dass auch der Soldat 104 Aufklärung betreiben kann und die durch ihn gewonnen Erkenntnisse für andere Benutzer des Informationsverarbeitungssystems 100 zur Verfügung stellen kann. Die Drohne 101 und der Soldat 104 und andere nicht dargestellte Benutzer können also sowohl situationsbegünstigte Benutzer als auch situationsbenachteiligte Benutzer sein. Die jeweilige Einordnung hängt lediglich von dem betrachteten Gebiet und den durch den jeweiligen Benutzer erfassbaren Objekten in dem Gebiet ab.

Fig. 2 zeigt eine schematische Darstellung eines Informationsverarbeitungssystems 200. Das Informationsverarbeitungssystem 200 basiert auf dem Informationsverarbeitungssystem 100 und ergänzt diese um einen zentralen Server 209, der über die Antennen 210, 207 und 208 mit der Drohne 201 und der Ausgabeeinrichtung 205 ein Kommunikationsnetzwerk bildet.

Der Server 209 stellt unterstützende Funktionen für die weiteren Benutzer 201, 204 des Informationsverarbeitungssystems 200 bereit. Beispielsweise kann der Server 209 komplexe Bild- und Objekterkennungsalgorithmen auf Bildmaterial anwenden, welches durch die Drohne 201 oder den Soldat 204 aufgenommen wurde. Die Komplexität und der Bedarf an Rechenleistung und Energie können so bei den einzelnen Benutzern bzw. in deren Ausrüstung gering gehalten werden.

In dem Informationsverarbeitungssystem 200 kann der Server 209 z.B. die Freund-/Feind-Erkennung basierend auf den Bildern durchführen, welche die Drohne 201 aufgenommen hat.

Die Person 221 in Fig. 2 trägt auf ihrer Jacke eine Flagge 222. Diese Flagge 222 kann in den von der Drohne 201 aufgenommenen Bildern durch den Server 209 erkannt werden. In Fig. 2 trägt der Soldat 204 die gleiche Flagge auf seiner Uniform. Die Person 221 kann folglich als Freund markiert werden. Dies ist in der Anzeige der Anzeigeeinrichtung 206 durch das Piktogramm 212 dargestellt.

Um die Freund-/Feind-Erkennung in dem Server 209 durchzuführen, kann z.B. eine breitbandige Datenverbindung zwischen dem Server 209 und der Drohne 201 eingesetzt werden, deren Datenrate über der Datenrate für die Kommunikation mit der Ausgabeeinrichtung 205 liegt. So können z.B. die Rohdaten, welche die Erfassungseinrichtung 202 aufnimmt per Sattelitenverbindung zu dem Server 209 übertragen werden und von diesem ausgewertet werden. Die Kommunikation zwischen dem Server 209 und dem Soldaten 204 bzw. einer Vielzahl von Soldaten kann z.B. über ein oben bereits erwähntes vermaschtes Netzwerk erfolgen.

Die Flagge 222 ist lediglich ein Beispiel für ein mögliches Identifikationsmerkmal. Selbstverständlich können weitere Merkmale genutzt werden, um eine Freund-/Feind-Erkennung durchzuführen. Beispielsweise können die Benutzer des Informationsverarbeitungssystems 200 Funksender tragen, welche eine Identifikation ausgeben.

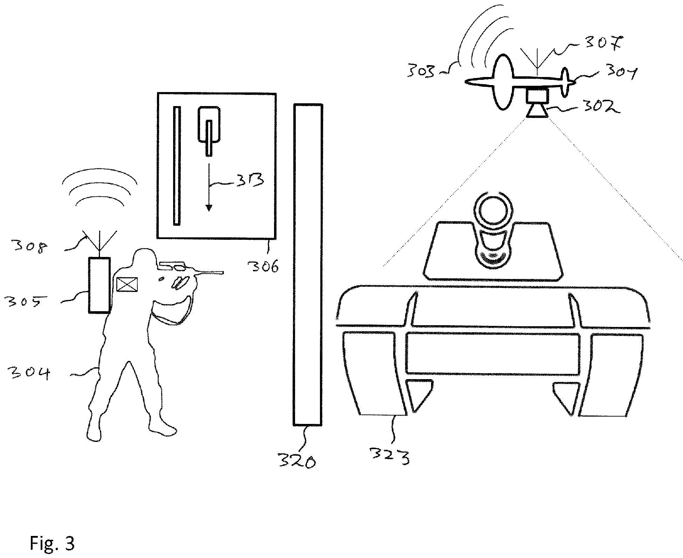

Fig. 3 zeigt eine schematische Darstellung eines weiteren Informationsverarbeitungssystems 300. Das Informationsverarbeitungssystem 300 basiert auf dem Informationsverarbeitungssystem 100 und dient der Erläuterung weiterer Funktionen, die das Informationsverarbeitungssystem 300 ausführen kann.

In dem Informationsverarbeitungssystem 300 erfasst die Drohne 301 mit Hilfe einer Kamera 302 oder anderer Sensoren, ein Fahrzeug 323, welches sich hinter einer Mauer 320 mit einer konstanten Geschwindigkeit bewegt. Bei dem Fahrzeug 323 kann es sich z.B. um einen Panzer handeln, der sich auf einer Patrouillenfahrt befindet.

Die Drohne 301 erfasst neben der Position des Fahrzeugs 323 zusätzlich auch dessen Geschwindigkeit. Diese Informationen werden an die Ausgabeeinrichtung 305 des Soldaten 304 übermittelt und dort ausgewertet und aufbereitet.

Die Anzeigeeinrichtung 306 kann nun neben der Position des Fahrzeugs 323 auch eine geschätzte Trajektorie 313 für das Fahrzeug 323 anzeigen. So kann der Soldat 304 ohne direkten Sichtkontakt zu dem Fahrzeug 323 sehen, wo und wohin sich dieses bewegt.

Die Berechnung der Trajektorien 313 kann z.B. auch auf einen Server 209 ausgelagert werden, wenn dieser vorhanden ist. Insbesondere können die verfügbaren Funktionen z.B. in Abhängigkeit der in dem Informationsverarbeitungssystem 300 vorhandenen Rechenleistung und Datenübertragungsbandbreite dynamisch angepasst bzw. freigeschaltet oder gesperrt werden.

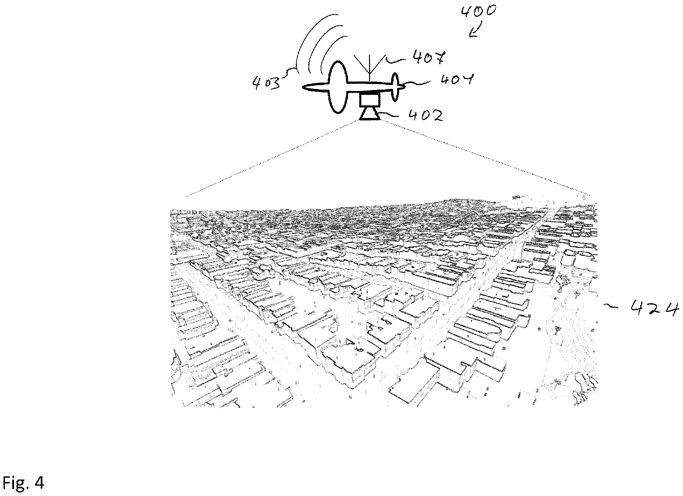

Fig. 4 zeigt eine schematische Darstellung eines weiteren Informationsverarbeitungssystems 400. In dem Informationsverarbeitungssystem 400 ist lediglich die Drohne 401 dargestellt, die ein relevantes Gebiet 424 überfliegt und entsprechende Detektionsergebnisse 403 ausgibt. Die Erfassungseinrichtung 402 kann wie oben bereits erläutert, jede Art von geeignetem Sensor aufweisen. Solche Sensoren können Kameras, Lasersensoren, Radarsensoren oder dergleichen sein.

Mit Hilfe der Detektionsergebnisse 403 kann z.B. ein 3D Modell des Gebiets 424 erstellt werden und ein Einsatz im Voraus geplant werden. Dabei können Bewegungen eigener Truppen simuliert werden und unterschiedliche mögliche Reaktionen feindlicher Truppen analysiert werden und entsprechende Gegenmaßnahmen geplant werden. Ferner kann z.B. während dem Einsatz eines Lenkflugkörpers das Gebiet überwacht werden und der Pfad des Lenkflugkörpers entsprechend angepasst werden.

In Fig. 4 sind neben der Drohne 401 keine weiteren Benutzer dargestellt. Dies soll verdeutlichen, dass die Erfassung der Detektionsergebnisse 403 nicht ausschließlich in Echtzeit erfolgen muss. Vielmehr können die Detektionsergebnisse 403 bereits vorab erfasst werden und später während einem Einsatz genutzt werden. Ferner können vorab gewonnen Daten z.B. über die statischen Merkmale des Geländes 424 während einem Einsatz auch mit live bzw. in Echtzeit gewonnen Daten kombiniert werden.

In den Figs. 1- 4 wird der Übersichtlichkeit halber jeweils nur ein einzelnes Objekt erfasst und dem Benutzer angezeigt. Diese Vereinfachung dient lediglich der Übersichtlichkeit. Selbstverständlich kann eine Vielzahl von Objekten gleichzeitig erfasst und dargestellt werden. Ferner versteht sich, dass die Funktionen der in den Figs. 1 -4 dargestellten Informationsverarbeitungssysteme beliebig kombiniert werden können.

In den Figs. 1- 4 wurde jeweils eine Drohne als derjenige Benutzer dargestellt, der die Informationen über Objekte in dem relevanten Gebiet erfasst. Es versteht sich, dass jeder andere Benutzer auch solche Informationen erfassen kann. Beispielsweise kann jeder der Soldaten eine Helmkamera mit sich führen, welche permanent das Sichtfeld des Soldaten filmt. Eine nachgeschaltete Bilder- und Objekterkennung, z.B. in der Ausgabeeinrichtung oder der Anzeigeeinrichtung, kann dann die relevanten Objekte erkennen und die gewonnen Informationen mit weiteren Benutzern teilen.

Die Ausgabeeinrichtung und die Anzeigeeinrichtung wurden als Einrichtungen dargestellt, welche einem Benutzer grafische bzw. optische Informationen liefern. Es versteht sich, dass die Ausgabeeinrichtung aber z.B. auch digitale Informationen zur weiteren Verarbeitung durch eine Steuerung z.B. einer Drohne ausgeben kann.

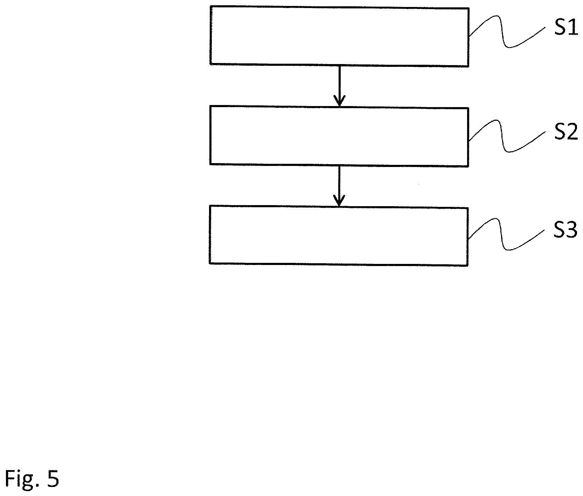

Im Folgenden werden zur Erläuterung der verfahrensbezogenen Fig. 5 die Bezugszeichen der vorrichtungsbezogenen Figs. 1- 4 beibehalten.

Fig. 5 zeigt ein Ablaufdiagramm eines Informationsverarbeitungsverfahrens für eine Vielzahl von Benutzern 101, 104, 201, 204, 301, 304, 401 zum Anreichern von Umgebungsinformationen über ein relevantes Gebiet 424.

In einem ersten Schritt S1 weist das Informationsverarbeitungsverfahren das Detektieren relevanter Objekte 121, 221, 323 durch mindestens einen der Benutzer 101, 104, 201, 204, 301, 304, 401 mit mindestens einer Erfassungseinrichtung 102, 202, 302, 402 auf. Die relevanten Objekte 121, 221, 323 können z.B. Menschen, Fahrzeuge und Flugzeuge sein, die mit Hilfe von Kameras, Laser- oder Infrarotsensoren oder dergleichen erfasst werden.

Beim Detektieren S1 können die relevanten Objekte 121, 221, 323, bzw. deren Eigenschaften, wie z.B. deren Position, Art, Haltung, Orientierung, Geschwindigkeit und/oder Gesinnung detektiert werden. Ferner können aber auch statische Merkmale des relevanten Gebiets 424 erfasst werden. Solche statischen Merkmale können z.B. Gebäude, Mauern, Bäume, Straßen und dergleichen sein.

Dies ermöglicht es, ein virtuelles Modell des relevanten Gebiets 424 zu erstellen, welches eine Kombination aus den statischen Merkmalen und den erfassten relevanten Objekten 121, 221, 323 umfasst.

Die Detektionsergebnisse 103, 203, 303, 403 werden in Schritt S2 einer Vielzahl von Benutzern 101, 104, 201, 204, 301, 304, 401 bereitgestellt. In Schritt S3 werden die Detektionsergebnisse 103, 203, 303, 403 für mindestens einen weiteren Benutzer 101, 104, 201, 204, 301, 304, 401 durch mindestens eine Ausgabeeinrichtung 105, 205 ausgegeben und z.B. grafisch angezeigt.

Basierend auf den Detektionsergebnissen 103, 203, 303, 403 kann ferner eine Bewegung der relevanten Objekte 121, 221, 323 berechnet werden und eine mögliche Trajektorie 313 der relevanten Objekte 121, 221, 323 ausgegeben werden.

Die mindestens eine Erfassungseinrichtung 102, 202, 302, 402 kann mit der mindestens einen Ausgabeeinrichtung 105, 205 in datenkommunikativer Verbindung, z.B. in einem vermaschten ad-hoc Netzwerk, gekoppelt werden. Dies ermöglicht eine sehr robuste Datenübertragung.

### Bezugszeichenliste

- 100, 200, 300, 400: Informationsverarbeitungssystem
- 101, 104, 201, 204, 301, 304, 401: Benutzer
- 102, 202, 302, 402: Erfassungseinrichtung
- 103, 203, 303, 403: Detektionsergebnisse
- 105, 205: Ausgabeeinrichtung
- 106, 206: Anzeigeeinrichtung
- 107, 108, 207, 208, 210, 307, 308: Antenne
- 407: Antenne
- 209: Server
- 211: modifizierte Detektionsergebnisse
- 212: Piktogramm
- 313: Trajektorie

- 120, 220, 320: Mauer
- 121, 221: Person
- 222: Flagge
- 323: Panzer
- 424: Gebiet

- S1 - S3: Verfahrensschritte

## Patentansprüche

1. Informationsverarbeitungssystem (100, 200, 300, 400) für eine Vielzahl von Benutzern (101, 104, 201, 204, 301, 304, 401) zur Anreicherung von Umgebungsinformationen über ein relevantes Gebiet (424), mit
mindestens einer Erfassungseinrichtung (102, 202, 302, 402), welche von den Benutzern (101, 104, 201, 204, 301, 304, 401) mitführbar ist und welche ausgebildet ist, relevante Objekte (121, 221, 323) zu detektieren und entsprechende Detektionsergebnisse (103, 203, 303, 403) auszugeben, und
mindestens einer Ausgabeeinrichtung (105, 205), welche von einem weiteren Benutzer (101, 104, 201, 204, 301, 304, 401) mitführbar ist und welche ausgebildet ist, für den jeweiligen Benutzer (101, 104, 201, 204, 301, 304, 401) die Detektionsergebnisse (103, 203, 303, 403) auszugeben.

2. Informationsverarbeitungssystem (100, 200, 300, 400) nach Anspruch 1, mit einem Kommunikationsnetzwerk, welches die mindestens eine Erfassungseinrichtung (102, 202, 302, 402) und die mindestens eine Ausgabeeinrichtung (105, 205) miteinander in datenkommunikativer Verbindung koppelt.

3. Informationsverarbeitungssystem (100, 200, 300, 400) nach einem der vorherigen Ansprüche, mit einer Anzeigeeinrichtung (106, 206) für zumindest einen der Benutzer (101, 104, 201, 204, 301, 304, 401), welche ausgebildet ist, die von der jeweiligen Ausgabeeinrichtung (105, 205) ausgegebenen Detektionsergebnisse (103, 203, 303, 403) für den Benutzer (101, 104, 201, 204, 301, 304, 401) anzuzeigen.

4. Informationsverarbeitungssystem (100, 200, 300, 400) nach einem der vorherigen Ansprüche, wobei die mindestens eine Erfassungseinrichtung (102, 202, 302, 402) ausgebildet ist, die Position und/oder die Art und/oder die Haltung und/oder eine Orientierung und/oder die Geschwindigkeit und/oder eine Gesinnung der relevanten Objekte (121, 221, 323) zu erkennen.

5. Informationsverarbeitungssystem (100, 200, 300, 400) nach den vorherigen Ansprüchen 3 und 4, wobei die Anzeigeeinrichtung (106, 206) ausgebildet ist, die in den Detektionsergebnissen (103, 203, 303, 403) enthaltenen Daten für den Benutzer (101, 104, 201, 204, 301, 304, 401) darzustellen.

6. Informationsverarbeitungssystem (100, 200, 300, 400) nach einem der vorherigen Ansprüche, wobei die mindestens eine Ausgabeeinrichtung (105, 205) ausgebildet ist, basierend auf den Detektionsergebnissen (103, 203, 303, 403) eine Bewegung der relevanten Objekte (121, 221, 323) zu berechnen und eine mögliche Trajektorie (313) der relevanten Objekte (121, 221, 323) auszugeben.

7. Informationsverarbeitungssystem (100, 200, 300, 400) nach einem der vorherigen Ansprüche, wobei die mindestens eine Erfassungseinrichtung (102, 202, 302, 402) ausgebildet ist, statische Merkmale des relevanten Gebiets (424) zu erfassen, und wobei die mindestens eine Ausgabeeinrichtung (105, 205) ausgebildet ist, ein virtuelles Modell des relevanten Gebiets (424) zu erstellen und auszugeben, welches eine Kombination aus den statischen Merkmalen und den erfassten relevanten Objekten (121, 221, 323) umfasst.

8. Informationsverarbeitungsverfahren für eine Vielzahl von Benutzern (101, 104, 201, 204, 301, 304, 401) zum Anreichern von Umgebungsinformationen über ein relevantes Gebiet (424), mit den Schritten
Detektieren (S1) relevanter Objekte (121, 221, 323) durch mindestens einen der Benutzer (101, 104, 201, 204, 301, 304, 401) mit mindestens einer Erfassungseinrichtung (102, 202, 302, 402),
Bereitstellen (S2) entsprechender Detektionsergebnisse (103, 203, 303, 403), und
Ausgeben (S3) der Detektionsergebnisse (103, 203, 303, 403) für einen weiteren Benutzer (101, 104, 201, 204, 301, 304, 401) durch mindestens eine Ausgabeeinrichtung (105, 205).

9. Informationsverarbeitungsverfahren nach Anspruch 8, aufweisend den Schritt des Koppelns der mindestens einen Erfassungseinrichtung (102, 202, 302, 402) und der mindestens einen Ausgabeeinrichtungen (105, 205) miteinander in datenkommunikativer Verbindung.

10. Informationsverarbeitungsverfahren nach einem der vorherigen Ansprüche 8 und 9, aufweisend den Schritt des Anzeigens der von der mindestens einen Ausgabeeinrichtung (105, 205) ausgegebenen Detektionsergebnisse (103, 203, 303, 403) für den jeweiligen Benutzer (101, 104, 201, 204, 301, 304, 401).

11. Informationsverarbeitungsverfahren nach einem der vorherigen Ansprüche 8 bis 10, wobei das Detektieren (S1) das Detektieren einer Position und/oder einer Art und/oder einer Haltung und/oder einer Orientierung und/oder einer Geschwindigkeit und/oder einer Gesinnung der relevanten Objekte (121, 221, 323) aufweist.

12. Informationsverarbeitungsverfahren nach den vorherigen Ansprüche 10 und 11, wobei das Anzeigen (S3) das Darstellen der in den Detektionsergebnissen (103, 203, 303, 403) enthaltenen Daten für den Benutzer (101, 104, 201, 204, 301, 304, 401) aufweist.

13. Informationsverarbeitungsverfahren nach einem der vorherigen Ansprüche 8 bis 12, wobei das Ausgeben aufweist, basierend auf den Detektionsergebnissen (103, 203, 303, 403) eine Bewegung der relevanten Objekte (121, 221, 323) zu berechnen und eine mögliche Trajektorie (313) der relevanten Objekte (121, 221, 323) auszugeben.

14. Informationsverarbeitungsverfahren nach einem der vorherigen Ansprüche 8 bis 13, wobei beim Detektieren (S1) ferner statische Merkmale des relevanten Gebiets (424) erfasst werden, und wobei beim Ausgeben ein virtuelles Modell des relevanten Gebiets (424) erstellt und ausgegeben wird, welches eine Kombination aus den statischen Merkmalen und den erfassten relevanten Objekten (121, 221, 323) umfasst.
